Europäisches Patentamt

European Patent Office

Office européen des brevets

(19)

(11) Veröffentlichungsnummer: **0 310 763 B1**

(12) **EUROPÄISCHE PATENTSCHRIFT**

(45) Veröffentlichungstag der Patentschrift:
07.11.90

(51) Int. Cl.⁵: **F16H 57/02, B61C 9/44**

(21) Anmeldenummer: **88111804.6**

(22) Anmeldetag: **22.07.88**

(54) Lagerung einer mindestens ein Zahnrad tragenden Getriebewelle.

(30) Priorität: **03.10.87 DE 3733567**

(43) Veröffentlichungstag der Anmeldung:
**12.04.89 Patentblatt 89/15**

(45) Bekanntmachung des Hinweises auf die Patenterteilung:
**07.11.90 Patentblatt 90/45**

(84) Benannte Vertragsstaaten:
**AT CH DE FR GB IT LI**

(56) Entgegenhaltungen:
**CH-A- 456 284
DE-A- 3 327 134
DE-A- 3 337 695
DE-A- 3 543 377
GB-A- 985 200**

(73) Patentinhaber: **Carl Hurth Maschinen- und Zahnradfabrik GmbH & Co, Moosacher Strasse 36,
D-8000 München 40(DE)**

(72) Erfinder: **Parzl, Franz, Kuckuckstrasse 18 E,
D-8031 Wörthsee(DE)**
Erfinder: **Eichinger, Johann, Edelweissstrasse 15,
D-8011 Vaterstetten(DE)**

## Beschreibung

Die Erfindung betrifft eine Lagerung für eine Getriebewelle gemäß dem Oberbegriff des Hauptanspruchs.

Damit geht die Erfindung aus von einem Stand der Technik, wie er aus der DE-A 3 327 134 und der DE-A 3 337 695 hervorgeht. Die Außenabmessungen des Getriebes werden dabei i.d.R. bestimmt von dem durch das (bzw. bei mehrezen Zahnrädern durch das größte) Zahnrad vorgegebenen Zentrierdurchmesser des Lagerschildes im Gehäuse sowie von den zur Befestigung des Lagerschildes am Gehäuse dienenden Schrauben, die auf einem den Zentrierdurchmesser umgebenden Lochkreis angeordnet sind; denn für diese Schrauben muß das Gehäuse eine ausreichende Dicke für die Einschraubgewinde aufweisen. Zwischen dem (größten) Zahnrad und der radial benachbarten Gehäusewand verbleibt so ein Zwischenraum, der aus schmierungstechnischen Gründen vielfach erwünscht ist.

Bei verschiedenen Einsatzfällen wäre es jedoch erforderlich, diesen Abstand auf das geringstmögliche Maß zu verringern, z.B. wenn neben oder unter dem Getriebe angeordnete Einrichtungen od. dgl. zu wenig Raum für das Getriebe lassen. Ein solcher Fall liegt z.B. vor bei Achsgetrieben von Schienenfahrzeugen wie Straßenbahnen u. dgl., wo der Trend zu sogenannten Niederflurwagen hin geht. Für den Getriebebauer ergibt sich daraus die Forderung, einerseits wegen hoher Antriebsleistungen einen großen Tellerad-Durchmesser unterzubringen, andererseits aber das Getriebe von der Radsatzachse nach unten möglichst niedrig zu halten.

Aufgabe der vorliegenden Erfindung ist es deshalb, ein Getriebe der eingangs genannten Art so weiterzubilden, daß das (größte) Zahnrad möglichst nahe an der radial benachbarten Gehäusewand bzw. dem Gehäuseboden anzuordnen ist, so daß für die Außenabmessungen in der jeweiligen radialen Richtung im wesentlichen nur der Durchmesser des (größten) Zahnrades und die Wanddicke in diesem Bereich maßgebend sind.

Die Lösung dieser Aufgabe erfolgt mit einer Lagerung gemäß dem kennzeichnenden Teil des Patentanspruchs 1. Auf diese Weise kann nämlich die Außenabmessung des Gehäuses um den sonst vorhandenen radialen Abstand zwischen dem Zahnrad und der Gehäusewand merklich verringert werden. Vorteilhaft ist dabei eine Ausgestaltung nach Anspruch 2.

Ein bevorzugtes Anwendungsgebiet der Erfindung sind Achsgetriebe für Schienenfahrzeuge (Anspruch 3). Dabei kann die besagte Welle eine die Radsatzachse umgebende Hohlwelle sein. In diesen Fällen bildet die besagte Gehäusewand den Boden des Getriebegehäuses. Eine Weiterbildung nach Anspruch 4 ist zweckmäßig, denn sie gewährleistet den kleinstmöglichen Abstand von der Achse der Hohlwelle bzw. der Radsatzachse bis zur Gehäuseunterseite bei ausreichender Sicherheit gegen Leckstellen an dem als Ölwanne ausgebildeten Gehäuse.

Ein weiterer Vorteil der erfindungsgemäßen Ausbildung des Gehäuses besteht in der Gewichtsersparnis, ein gerade bei Schienenfahrzeugen nicht zu unterschätzender Pluspunkt.

Die Erfindung wird nachstehend anhand eines in drei Figuren dargestellten Ausführungsbeispiels beschrieben. Dabei zeigen

Figur 1 einen Vertikalschnitt durch ein Kegelrad-Hohlwellen-Getriebe herkömmlicher Bauweise in schematischer Darstellung,

Figur 2 einen gleichartigen Vertikalschnitt durch ein Kegelrad-Hohlwellen-Getriebe mit einer erfindungsgemäßen Lagerung, ebenfalls in schematischer Darstellung, und

Figur 3 eine Teilansicht des Getriebes von Figur 2.

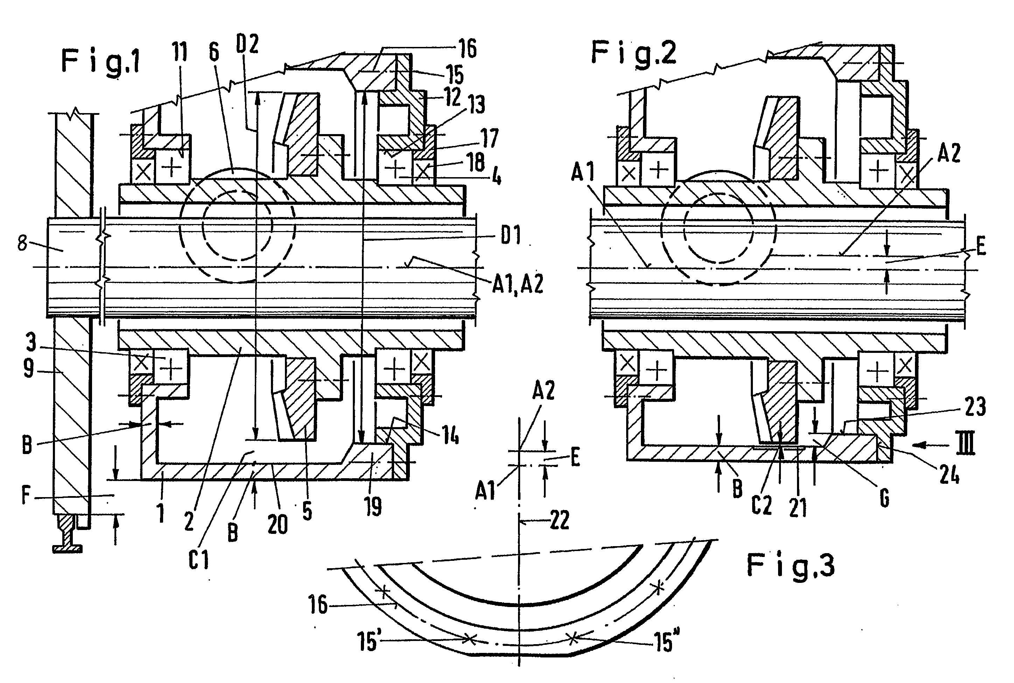

In einem Gehäuse 1 eines bekannten Kegelrad-Hohlwellen-Getriebes (Fig.1) ist eine Hohlwelle 2 in Wälzlagern 3, 4 drehbar gelagert. Dabei ist ein Tellerrad 5 drehfest auf der Hohlwelle 2 aufgebracht, das mit einem Kegelritzel 6 in Zahneingriff steht, welches von einem nicht gezeigten Motor angetrieben wird. Die Drehbewegung wird über eine mittels einer Stirnzahnkupplung mit der Hohlwelle 2 verbundene, ebenfalls nicht gezeigte elastische und/oder gelenkige Kupplung auf eine Radsatzachse 8 übertragen, die in einem Drehgestell eines Schienenfahrzeugs gelagert ist. An ihren Enden sind die Räder 9 befestigt, von denen nur eines gezeigt ist.

Um die Hohlwelle 2 mit dem Tellerrad 5 gemeinsam in axialer Richtung in das Gehäuse 1 einbauen zu können, ist der Außenring des Lagers 4 nicht wie der des Lagers 3 in einer Gehäusebohrung 11 aufgenommen, sondern in einer Bohrung eines Lagerschilds 12, das in einer zweiten Gehäusebohrung 14 aufgenommen ist. Dabei ist der Durchmesser $D1$ der Gehäusebohrung 14 nur geringfügig größer als der Außendurchmesser $D2$ des Tellerrades 5. Neben den Wälzlagern 3, 4 sind noch Deckel 17 mit Dichtungen 18 vorgesehen.

Das Lagerschild 12 ist mit Schrauben 15 am Gehäuse 1 befestigt, die auf einem die Gehäusebohrung 14 umgebenden Teilkreis 16 angeordnet sind. Zu diesem Zweck weist das Gehäuse 1 in diesem Bereich gegenüber den sonst vorhandenen Wanddicken $B$ eine Verdickung 19 auf. Daraus ergibt sich zwischen dem Tellerrad 5 und dem Boden 20 des Gehäuses 1 ein radialer Abstand $C1$. Dieser Abstand $C1$ ist mit maßgebend für die Bauhöhe des Getriebes bis zur Achse $A1$ der Radsatzachse bzw. für die sogenannte Bodenfreiheit $F$ zwischen dem Getriebe und der Schienenoberkante.

Eine Ausführung mit verringerter Bauhöhe bzw. mit größerer Bodenfreiheit ist in Figur 2 gezeigt. Hier ist die Achse $A2$ der zweiten Lagerbohrung 14 bzw. des Lagerschilds 12 um einen Betrag $E$ gegenüber der gemeinsamen Achse $A1$ von Bohrung 13, Hohlwelle 2 und Radsatzachse 8 nach oben versetzt. Durch diese exzentrische Anordnung der Bohrung 13 im Lagerschild 12 kann der Boden 20 bis auf einen ganz geringen Abstand $C2$ zum Tellerrad 5 höher gesetzt werden, wobei er bei Bedarf in diesem Bereich 21 spanabhebend bearbeitet wird.

Die Größe des Betrages $E$ richtet sich u.a. nach der Verdickung 19. Diese kann örtlich reduziert werden, wenn die unteren Schrauben 15', 15" auf dem Teilkreis 16 beiderseits einer die beiden Achsen A1 und A2 beinhaltenden gedachten Ebene 22 angeordnet sind (Fig.3). Dabei ist nur zu beachten, daß der tiefste Punkt 23 der Bohrung 13 noch so weit über dem Boden 20 liegt (Maß G), daß die Summe aus diesem Maß G und der Wanddicke B eine ausreichend breite Dichtfläche 24 zwischen dem Gehäuse 1 und dem Lagerschild 12 ergibt.

Die Erfindung ist nicht auf das Ausführungsbeispiel "Getriebe für Schienenfahrzeuge" beschränkt. Sie ist vielmehr bei allen Stirnrad-, Kegelrad- und Schneckengetrieben anwendbar, bei denen eine wenigstens ein Zahnrad od. dgl. aufweisende Welle in axialer Richtung in das Gehäuse eingebaut werden muß und diese Einbauöffnung mit einem Lagerschild od. dgl. verschlossen wird.

## Patentansprüche

1) Lagerung einer mindestens ein Zahnrad (5) tragenden Welle (2) in einem Getriebegehäuse (1) mit einem ersten (3) und einem zweiten (4) Wälzlager, wobei der Außenring des ersten Wälzlagers in einer entsprechenden ersten Gehäusebohrung (11) und der Außenring des zweiten Wälzlagers in einer entsprechenden Bohrung (13) eines Lagerschildes (13) angeordnet ist, wobei das Lagerschild in einer entsprechenden zweiten Gehäusebohrung (14) zentriert ist, deren Durchmesser (D1) um ein axiales Einführen der Welle in das Getriebegehäuse zu ermöglichen mindestens so groß ist wie der Außendurchmesser (D2) des Zahnrades bzw. des größten Zahnrades, dadurch gekennzeichnet, daß die erste (11) und die zweite Gehäusebohrung (14) achsparallel zueinander versetzt sind und die Bohrung (13) im ·Lagerschild (12) zu seinem Zentrierdurchmesser um den gleichen Betrag (E) und in der gleichen Richtung wie die erste Gehäusebohrung (11), achsparallel versetzt ist.

2) Lagerung nach Anspruch 1, bei der das Lagerschild mittels auf einem die zweite Gehäusebohrung umgebenden Teilkreis angeordneten Schrauben (15) am Gehäuse befestigt ist, dadurch gekennzeichnet, daß eine die Achsen (A1,A2) der beiden Gehäusebohrungen (11,14) beinhaltende gedachte Ebene (22) zwischen zwei auf dem Teilkreis (16) angeordneten Schrauben (15',15") verläuft.

3) Lagerung nach Anspruch 1 oder 2, gekennzeichnet durch ihre Anwendung bei einem Achsgetriebe für ein Scheinenfahrzeug, wobei der Achsversatz von der zweiten (14) zu der ersten Gehäusebohrung (11) nach unten, d.h. zum Boden (20) des Gehäuses (1) erfolgt.

4) Lagerung nach Anspruch 3, dadurch gekennzeichnet, daß die Innenseite des Bodens (20) um ein Maß (G) tiefer liegt als der unterste Punkt (23) der zweiten Gehäusebohrung (14), derart, daß die Summe aus diesem Maß (G) und der Wanddicke (B) eine ausreichend breite Dichtfläche (24) in diesem Bereich des Teilkreises (16) ergibt.

## Claims

1. An arrangement for mounting a shaft (2) carrying at least one gearwheel (5) in a transmission housing (1) with a first rolling bearing (3) and a second rolling bearing (4), the outer ring of the first rolling bearing being arranged in a corresponding first housing bore (11) and the outer ring of the second rolling bearing being arranged in a corresponding bore (13) of a bearing plate (12), the bearing plate being centred in a corresponding second housing bore (14), the diameter (D1) of which, in order to allow axial insertion of the shaft into the transmission housing, is at least as large as the external diameter (D2) of the gearwheel or of the largest gearwheel, characterized in that the first housing bore (11) and the second housing bore (14) are displaced relative to each other in an axially parallel manner and the bore (13) in the bearing plate (12) is displaced relative to its centre diameter by the same amount (E) and in the same direction as the first housing bore (11) in an axially parallel manner.

2. A mounting arrangement according to claim 1, in which the bearing plate is secured onto the housing by means of bolts (15) arranged on a pitch circle surrounding the second housing bore, characterized in that an imaginary plane (22) containing the axes (A1, A2) of both housing bores (11, 14) extends between two bolts (15', 15") arranged on the pitch circle (16).

3. A mounting arrangement according to Claim 1 or 2, characterized by its use in an axle transmission for a rail vehicle, the axial displacement of the second housing bore (14) relative to the first housing bore (11) occurring downwards, i.e. towards the bottom (20) of the housing (1).

4. A mounting arrangement according to Claim 3, characterized in that the inner side of the bottom (20) is lower than the lowest point (23) of the second housing bore (14) by a distance (G) such that the sum of this distance (G) and the wall thickness (B) produces a sufficiently wide sealing surface (24) in this region of the pitch circle (16).

## Revendication

1. Montage dans un carter de transmission (1), avec un premier (3) et un second (4) palier à rouleaux, d'un arbre (2) portant au moins une couronne différentielle (5), la bague externe du premier palier à rouleaux étant disposée dans un premier alésage correspondant (11) du carter, tandis que la bague externe du second palier à rouleaux est disposée dans un alésage correspondant (13) d'un flasque de palier (12), ce flasque de palier étant centré dans un second alésage correspondant (14) du carter, dont le diamètre (D1), pour permettre une introduction axiale de l'arbre dans le carter de la transmission, est au moins aussi grand que le diamètre externe (D2) de la roue dentée ou bien de la plus grande des roues dentées, montage caractérisé en ce que le premier (11) alésage du carter et le second (14) alésage du carter sont décalés l'un par rapport à l'autre, leurs axes restant parallèles, tandis que l'alésage (13) dans le flasque de palier (12) est décalé par rapport à son diamètre de centrage de la même quantité (E) et dans la même direction que le premier alésage (11) du carter, les axes restant parallèles.

2. Montage selon la revendication 1, dans lequel le flasque de palier est fixé sur le carter au moyen de vis (15) disposées sur un cercle primitif entourant le second alésage du carter, montage caractérisé en ce qu'un plan supposé (22), contenant les deux axes (A1, A2) des deux alésages (11, 14) du carter, passe entre deux vis (15', 15") disposées sur le cercle primitif (16).

3. Montage selon la revendication 1 ou la revendication 2, caractérisé en ce qu'il est mis en œuvre dans une transmission d'essieu pour un véhicule ferroviaire, auquel cas, le décalage de l'axe du second (14) alésage du carter par rapport à l'axe du premier (11) alésage du carter, se fait vers le bas, c'est-à-dire vers le fond (20) du carter (1).

4. Montage selon la revendication 3, caractérisé en ce que la face interne du fond (20) est à une distance (G) en dessous du point le plus bas (23) du second alésage (14) du carter, de sorte que la somme de cette distance (G) et de l'épaisseur (B) de la paroi donne une surface d'étanchement (24) suffisamment large dans cette zone du cercle primitif (16).

Fig.1

Fig.2

Fig.3

EP 0 310 763 B1